# EUROPEAN PATENT APPLICATION

(11) **EP 3 981 501 A1**
(43) Date of publication of application: **13.04.2022**
(21) Application number: 20201028.6
(22) Date of filing: 09.10.2020
(51) Int. Cl.: B01D 53/50, B01D 53/83, B01J 4/00, B05B 1/00, F23J 15/00

(54) **REACTOR FOR CLEANING FLUE GASES, METHOD FOR OPERATING A REACTOR, SPRAY NOZZLE AND METHOD FOR OPERATING THE SPRAY NOZZLE**

(71) Applicant: Doosan Lentjes GmbH, 40880 Ratingen (DE)
(72) Inventor: BROSCH, Björn, 45136 Essen (DE); KRUSCH, Sebastian, 44892 Bochum (DE); NARIN, Oguzhan, 45549 Sprockhövel (DE); YILDIZ, Hasan, 47805 Krefeld (DE)
(74) Representative: Feucker, Max Martin

(57) **Abstract**

**Summary**

The present invention relates to a reactor for cleaning flue gases by injecting dry or quasi-dry sorbent into a flue gas stream, comprising
- a flue gas inlet at the bottom of the reactor,
- an outlet at the top of the reactor,
- a dry sorbent injection system with at least one dry sorbent outlet for injecting dry sorbent into the reactor, the at least one dry sorbent outlet being arranged between the flue gas inlet and the outlet, and
- at least one liquid injection system, the liquid injection system comprising at least one spray nozzle having at least one spray opening for supplying atomized liquid into the reactor between the flue gas inlet and the outlet.

## Description

The present invention relates to a reactor for cleaning flue gases by injecting dry or quasi-dry sorbent into a flue gas stream, comprising a flue gas inlet at the bottom of the reactor, an outlet at the top of the reactor, a dry sorbent injection system with at least one dry sorbent outlet for injecting dry sorbent into the reactor, the at least one dry sorbent outlet being arranged between the flue gas inlet and the outlet, and at least one liquid injection system, the liquid injection system comprising at least one spray nozzle having at least one spray opening for supplying atomized liquid into the reactor between the flue gas inlet and the outlet. The invention also relates to a method for operating a reactor for cleaning flue gases, comprising the steps of supplying a flue gas at the bottom of the reactor, supplying a dry sorbent into the reactor and supplying atomized liquid through a spray opening of a spray nozzle into the reactor. Such a spray nozzle for a reactor comprises a first inlet for a liquid and at least one spray opening for automizing the liquid. In order to operate such a spray nozzle, the liquid is pressurized and supplied through the spray opening of the spray nozzle.

The combustion gases produced in a combustion chamber are usually introduced as flue gas through the inlet into the reactor. A dry sorbent is injected into the flue gas, for example calcium oxide or calcium hydroxide powder is injected into the flue gas. According to the prior art and also according to an embodiment of the invention, the dry sorbent containing flue gas may be forced through a venturi system, so that a so called fluidized bed may be formed downstream of the venturi system in order to enhance the sorption process.

In order to enhance the sorption process further, it is known to inject water into the fluidized bed downstream or upstream of the venturi system. Alternative, it is known to moisten the dry sorbent before injection into the reactor.

After the sorbent comprising flue gas leaves the reactor through the outlet it is advanced to a separator/filter, in which solid particles are separated from the stream.

A reactor with the above described features is for example known from EP 3 581 258 A1.

It has been found that material deposits on the outer surface of the spray nozzle. These deposits may grow with time and may affect the spray pattern of the atomized liquid in an undesired way, which may affect the sorption process negatively.

Accordingly, it is an object of the present invention that the process of cleaning (desulfurization) is performed more efficiently. In particular it is an object of the present invention to remove the depositions on the outer surface of the spray nozzle.

This object is achieved with a reactor, a method for operating a reactor, a spray nozzle and a method for removing contaminations from an outer surface of a spray nozzle according to the features of the respective independent claim. The dependent claims and the description disclose preferred embodiments, wherein single features of the preferred embodiments can be combined with each other in a technically meaningful manner. In particular, features disclosed with regard to the methods can be applied to the reactor or to the spray nozzle or vice versa. In particular, those features disclosed with regard to the spray nozzle may be applied to a spray nozzle arranged in a reactor.

The object is in particular achieved with a reactor with the above referenced features, wherein the spray nozzle has at least one nozzle outlet arranged inside the reactor in addition to the spray opening, the nozzle outlet being connected via at least one separate valve to at least one source of pressurized fluid.

The object is also achieved with a method for operating a reactor with the above referenced steps, wherein contaminations/depositions on an outer surface of the spray nozzle are removed by blowing pressurized fluid through at least one nozzle outlet of the nozzle into the reactor.

Furthermore, the object is achieved with a spray nozzle for a reactor for cleaning flue gases, wherein the spray nozzle has at least one further nozzle outlet in addition to the at least one spray opening, the nozzle outlet being associated with at least one second inlet for a fluid.

Also, the above object is achieved with a method for removing contaminations on an outer surface of a spray nozzle, wherein pressurized fluid is discontinuously blown through an additional nozzle outlet of the nozzle.

The present invention suggests that contaminations/depositions on the outer surface of the spray nozzle are blast off by providing a pulse of pressurized fluid (i.e. a liquid, a gas or a mixture of liquid and gas) through the at least one additional nozzle outlet, which nozzle outlet is in particular arranged close to the spray opening and/or at locations where depositions regularly occur.

In order to provide a pulse of pressurized fluid the separate valve is embodied to open for a predetermined interval of time so that a respective pulse is produced. Preferably, the pulse of pressurized fluid has a duration of more than 1 s [seconds], preferably more than 5 s, but not more than 30 s, preferably not more than 20 s.

The reactor may comprise a control unit connected to the respective valve(s), which control unit may be embodied to carry out the inventive method and in particular to open the valve in predefined time intervals. Accordingly, a pulse of fluid may be provided in regular or irregular time intervals, so that contaminations/depositions are blown off regularly.

It might also be possible that the control unit is embodied such that pulses of liquid are provided depending on the amount of sorbent supplied into the reactor. Preferably, a pulse of pressurized fluid is produced after a predetermined amount of dry sorbent is supplied by the dry sorbent injection system. Such a method for operating the reactor would imply that the amount of depositions depends on the amount of drysorbent being supplied into the reactor.

The fluid may be stored in a pressurized state for example in a respective pressurized container as a source of pressurized fluid. Alternatively, the fluid may be pressurized by a pump or similar as a source of pressurized fluid.

The spray nozzle may comprise a (in particular central) feed tube connecting the first inlet and the at least one spray opening. In this case the first inlet of the spray nozzle is arranged outside the reactor for connecting the first inlet to the source of pressurized liquid.

Furthermore, the spray nozzle may comprise a pulse tube, which connects the at least one second inlet and the nozzle outlet(s). In this case the second inlet of the spray nozzle is arranged outside the reactor for connecting the first inlet to the source of pressurized fluid. In a preferred embodiment the pulse tube concentrically surrounds the feed tube.

Preferably, in such an embodiment the at least one spray opening is arranged in an end face of the spray nozzle, while the at least one nozzle outlet is arranged in a circumferential surface of the spray nozzle. Alternatively or additionally at least one nozzle outlet may also be arranged in the end face of the spray nozzle, preferably surrounding the spray opening.

In a preferred embodiment there are two or more, in particular more than four or even more than eight nozzle outlets. When multiple nozzle outlets are provided, depositions on the outer surface of the nozzle may be removed at multiple locations, thereby cleaning the whole outer surface of the nozzle. Preferably, all nozzle outlets are connected to the second inlet(s) via the pulse tube.

Each nozzle outlet may have a desired cross sectional shape. For example, the cross sectional shape of the nozzle outlet may be circular, elliptical, polygonal, in particular square or rectangular. The shape may be embodied such that in the specific case the contaminations/depositions are blast off effectively.

In an even further embodiment, the nozzle outlets are embodied as slits. This means that the slits extend in one direction more than three, preferable more than five or even more than seven times longer than in a perpendicular direction. With such slits a comparatively great section of the outer surface of the spray nozzle can be covered, while still providing a comparatively strong pulse of fluid.

Each nozzle outlet may have a cross section area of at least 50 mm², preferable of at least 100 mm² or even 500 mm².

In particular, the ratio of the cross section area of one/each nozzle outlet to the minimum cross section area of one spray opening is greater than 1,5 or even greater than 3. Such a comparatively big cross section of the nozzle outlet implies that comparatively much fluid can be applied in order to blast off the contaminations/depositions.

In addition to the feed tube and the pulse tube the spray nozzle may also comprise a return tube, which return tube is arranged concentrically to the feed tube and also to the return tube, the return tube comprising a return outlet. In this case a connection between the feed tube and the return tube is embodied, so that liquid from the feed tube can flow via the return tube to the return outlet of the return tube. In such an embodiment the to be atomized liquid can be provided through the feed tube to the spray opening, wherein only a part of the provided liquid is atomized through the spray opening and the other part of the provided liquid is returned via the return tube to the return outlet.

In one embodiment the pressurized liquid, in particular water, which is already stored for being provided to the spray opening, can be used as fluid to be blown through the additional nozzle outlet. In this case the source of pressurized liquid may be directly connected to the separate valve associated with the additional nozzle outlet, so that the pressurized liquid may be directly provided through the second inlet of the spray nozzle. Alternatively, a separate valve may be arranged between the return outlet of the return tube and the second inlet of the pulse tube. This has the advantage, that only a short pipe system needs to be embodied between the return outlet and the second inlet and an additional piping between the source of pressurized liquid can be avoided.

Alternatively, there might be a separate source of pressurized fluid, which is only used for being blown through the additional nozzle outlet(s). This source may be a source of pressurized liquid, such as water. Accordingly, the liquid provided through the nozzle opening does not need to be the same liquid as provided through the spray opening.

In an embodiment a source of pressurized gas (such as pressurized air) may be provided as source of pressurized fluid and may be connected via the separate valve to the second inlet of the spray nozzle in order to provide pressurized gas for blowing through the additional nozzle outlet(s). In this case only gas may be used as medium for removing/blasting off the contaminations/depositions. Using gas as fluid has the advantage that no liquid will leave the nozzle outlets between two pulses of pressurized fluid.

In a further embodiment, a mixture of liquid, in particular water, and gas may be blown through the nozzle outlet(s) as fluid. Providing a mixture of gas and liquid has the advantage that depositions/contaminations may be blown off more efficiently. The liquid as well as the gas may each be provided in a pressurized state separately. In this case, a first second inlet (of the pulse tube) may be connected via a respective valve to the source of pressurized liquid and a second second inlet (of the pulse tube) may be connected via a separate valve to the source of pressurized gas. Nevertheless, when a mixture of liquid and gas is provided through the nozzle outlet only one of the liquid and gas (in particular the liquid) may be provided in a pressurized state, while the second fluid is sucked in by the pressurized fluid through a second inlet. Accordingly, only one valve needs to be operated, even if a mixture of gas and liquid is provided.

If a gas (in particular air) or pressurized gas (in particular pressurized air) is used, the gas may be preheated in order to shift the dew point and avoid condensation within the flue gas stream.

The provided pressurized fluid may also be an acid or any other chemically active substance, so that the depositions are not only mechanically blast off but that a chemical cleaning of the outer surface of the spray nozzle may occur additionally. An acid is preferably used in combination with pressurized air as further fluid.

In one embodiment a gas is provided through the nozzle outlet between two blows/pulses of fluid. This way there is a constant flow of gas through the nozzle outlets, avoiding that the nozzle outlets are completely closed by depositions/contaminations, while the depositions can be blown off with the pulse of pressurized fluid. A gas with low pressure is in particular provided between two high pressure pulses of the same gas.

The fluid is in particular pressurized up to a pressure between 10 bar and 60 bar, in particular to a pressure between 15 bar and 30 bar. Accordingly, the pulse of fluid may be provided with a pressure of at least 10 bar through the nozzle outlet(s).

The reactor for cleaning flue gases is in particular arranged in a vertical manner. Accordingly, the flue gas inlet is arranged at the very bottom of the reactor, meaning that there is preferably no means for collecting residuals below the flue gas inlet.

Usually, the flue gas is provided through a duct from a combustion chamber, which duct leads in a horizontal manner to the flue gas inlet of the reactor.

In such a vertical reactor, the flue gas outlet is arranged vertically above the flue gas inlet, so that the reactor can be considered that part, in which the flue gas advances vertically from the bottom to the top. The reactor is delimited by a reactor wall.

A dry sorbent (i.e. CaO or Ca(OH)₂ powder) is provided by the dry sorbent injection system into the reactor. The location(s) at which the dry sorbent comes into contact with the flue gas and is advanced from thereon with the flue gas through the reactor is considered the dry sorbent outlet. The spray nozzle of the liquid injection system may be arranged upstream to the dry sorbent injection system. But, it is preferred that the liquid injection system is arranged downstream of the dry sorbent injection system, which enhances the desulfurization efficiency.

In a preferred embodiment, the liquid injection system comprises two or more, for example four, more than four, six or even more than six spray nozzles each having a spray opening and at least one additional nozzle outlet as described above.

The invention and the technical background will now be described with reference to the figures. The figures show schematically
- Figure 1:: an outer view of a first embodiment of the tip of a spray nozzle arranged in a reactor,
- Figure 2:: a cross sectional view through the spray nozzle,
- Figure 3:: a cross sectional view of a further embodiment of a spray nozzle and
- Figure 4:: a reactor for cleaning flue gases in a cross sectional view.

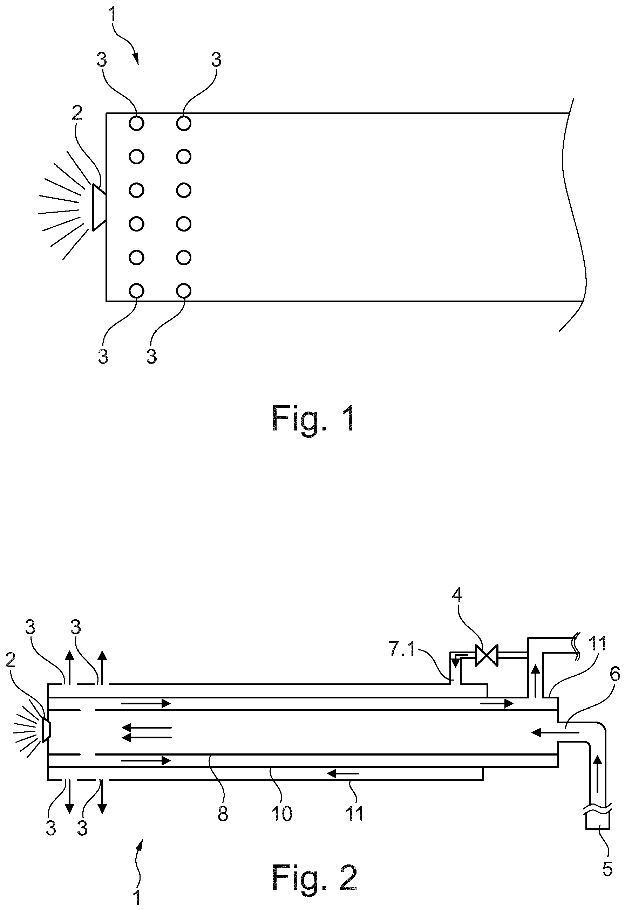

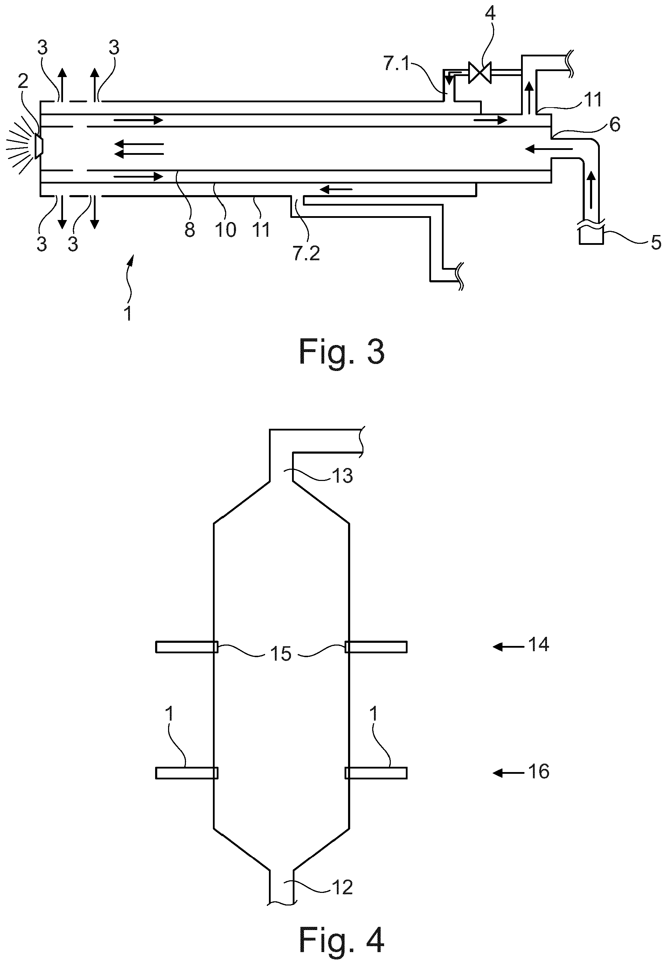

The tip of a nozzle 1 as shown in figure 1 is arranged in a reactor (see figure 4) for cleaning flue gases. The spray nozzle 1 comprises a spray opening 2 in an end face of the nozzle 1, wherein atomized liquid is supplied by the spray opening 2 into the reactor. Additionally, the spray nozzle 1 comprises nozzle outlets 3 arranged on a circumferential surface of the spray nozzle 1 close to the spray opening 2. In use depositions/contaminations may adhere to the outer surface of the spray nozzle 1, which can be removed by supplying a pulse/blow of fluid through the nozzle outlets 3.

As can be seen from figure 2 the nozzle 1 comprises an inner feed tube 8, which has a first inlet 6 being connected to a source of pressurized liquid 5 and which comprises the spray opening 2, so that pressurized liquid can be supplied through the feed tube 8 to the spray opening 2.

The feed tube 8 is surrounded by a return tube 10 which comprises a return outlet 11. Liquid which entered the feed tube 8 through the first inlet 6 and which was not atomized through the spray opening 2 can flow from the feed tube 8 into the return tube 10 and to the return outlet 11.

The return tube 10 is surrounded by a pulse tube 9, which pulse tube 9 comprises the nozzle outlets 3. Furthermore, the pulse tube 9 has a second inlet 7.1, which is connected via a valve 4 to the return outlet 11.

The valve 4 may be opened during operation of the reactor in predefined time intervals for a short period of time, so that pressurized liquid as fluid is provided as pulse through the nozzle outlets 3. By such a pulse of fluid the contaminations/depositions on the outer surface of the spray nozzle 1 can be removed/blast off. In the before described embodiment, the liquid being atomized through the spray opening 2 is also used for creating the pulse of fluid.

The embodiment shown in figure 3 is basically the same as the before described embodiment. But according to this embodiment, the pulse tube 9 comprises a second second inlet 7.2 which is connected to a source of pressurized air. With such a setup air can be continuously provided through the pulse tube 9 and through the nozzle outlets 3 at comparatively low pressure, while a short pulse of air at high pressure for removing depositions/contaminations on the outer surface of the spray nozzle may be provided. In an even further embodiment, it would be possible to provide a combination of a short pulse of water and air, in which case a mixture of water and air is provided as fluid pulse through the nozzle outlets 3.

Figure 4 schematically depicts a reactor for cleaning flue gases. The reactor comprises a flue gas inlet 12 at the bottom and an outlet 13 at its top. Flue gases from a combustion chamber may flow more or less upwardly from the flue gas inlet 12 to the outlet 13. A liquid injection system 16 comprising at least one nozzle 1 is arranged such that the spray opening 2 and the nozzle outlets 3 are arranged within the reactor.

A dry sorbent injection system 14 comprising a dry sorbent outlet 15 arranged within the reactor is arranged above the liquid injection system 16. Alternatively, the dry sorbent injection system 14 may be arranged below the liquid injection system 16. Dry sorbent such as CaO or Ca(OH)2 powder is injected through the dry sorbent injection system 14 into the reactor.

### Reference signs

- 1: spray nozzle
- 2: spray opening
- 3: nozzle outlet
- 4: valve
- 5: source of pressurized liquid
- 6: first inlet
- 7.1, 7.2: second inlet
- 8: feed tube
- 9: pulse tube
- 10: return tube
- 11: return outlet
- 12: flue gas inlet
- 13: outlet
- 14: dry sorbent injection system
- 15: dry sorbent outlet
- 16: liquid injection system

## Claims

1. Reactor for cleaning flue gases by injecting dry or quasi-dry sorbent into a flue gas stream, comprising
- a flue gas inlet (12) at the bottom of the reactor,
- an outlet (13) at the top of the reactor,
- a dry sorbent injection system (14) with at least one dry sorbent outlet (15) for injecting dry sorbent into the reactor, the at least one dry sorbent outlet (15) being arranged between the flue gas inlet (12) and the outlet (13), and
- at least one liquid injection system (16), the liquid injection system (16) comprising at least one spray nozzle (1) having at least one spray opening (2) for supplying atomized liquid into the reactor between the flue gas inlet (12) and the outlet (13),
**characterized in that**
the spray nozzle (1) has at least one nozzle outlet (3) arranged inside the reactor in addition to the spray opening (2), the nozzle outlet (3) being connected via at least one separate valve (4) to at least one source of pressurized fluid (5).

2. Reactor according to claim 1, the separate valve (4) being embodied to allow at least one pulse of pressurized fluid (5) to be supplied through the nozzle outlet (3).

3. Reactor according to claim 1 or 2, wherein the source of pressurized fluid is a source of pressurized liquid and/or gas.

4. Reactor according to one of the preceding claims, wherein the spray nozzle (1) is embodied according to one of claims 9 to 14.

5. Method for operating a reactor for cleaning flue gases, comprising the following steps:
- Supplying a flue gas at the bottom of the reactor,
- Supplying a dry sorbent into the reactor, and
- Supplying atomized liquid through a spray opening (2) of a spray nozzle (1) into the reactor,
- Removing contaminations on an outer surface of the spray nozzle (1) by blowing pressurized fluid through at least one nozzle outlet (3) of the nozzle (1) into the reactor.

6. Method according to claim 5, wherein the fluid is a liquid, in particular water or acid, a gas, in particular air, or a mixture of liquid and gas.

7. Method according to claim 5 or 6, wherein the fluid is blown through the nozzle outlet (3) in predefined time intervals or depending on the amount of dry sorbent supplied into the reactor.

8. Method according one of the preceding claims 5 to 7, wherein a gas, in particular air, is provided through the nozzle outlet (3) between two blows of fluid with low pressure.

9. Spray nozzle (1) for a reactor for cleaning flue gases, comprising
- a first inlet (6) for a liquid,
- at least one spray opening (2) for atomizing the liquid,
**characterized in that**
the spray nozzle (1) has at least one further nozzle outlet (3) in addition to the at least one spray opening (2), the nozzle outlet (3) being associated with at least one second inlet (7.1, 7.2) for a fluid.

10. Spray nozzle (1) according to claim 9, wherein the at least one spray opening (2) is arranged in an end face of the spray nozzle (1) and the at least one, preferably multiple nozzle outlet(s) (3) is/are arranged in a circumferential surface of the spray nozzle (1).

11. Spray nozzle (1) according to one of the preceding claims 9 to 10, wherein the ratio of the cross section area of one nozzle outlet (3) to the minimum cross section area of one spray opening (2) is greater than 1,5.

12. Spray nozzle (1) according to one of the preceding claims 9 to 11, wherein a feed tube (8) connects the first inlet (6) and the at least one spray opening (2) and wherein a pulse tube (9) connects the at least one second inlet (7.1, 7.2) and the nozzle outlet (3), the feed tube (8) and the pulse tube (9) being arranged concentrically to each other.

13. Spray nozzle (1) according to claim 12, wherein the pulse tube (9) has a first second inlet (7.1) for pressurized liquid and a second second inlet (7.2) for pressurized or unpressurized gas.

14. Spray nozzle (1) according to one of the preceding claims 9 to 13, wherein a valve (4) is connected to each second inlet (7.1, 7.2).

15. Method for removing contaminations on an outer surface of a spray nozzle (1), comprising at least the following steps:
- Pressurizing a liquid,
- Supplying the pressurized liquid through a spray opening (2) for atomizing the liquid,
- Discontinuously blowing pressurized fluid through an additional nozzle outlet (3) of the nozzle.
